# FASCICULE DE BREVET EUROPEEN

(11) **EP 1 211 485 B1**
(45) Date de publication et mention de la délivrance du brevet: **10.02.2010**
(21) Numéro de dépôt: 01420220.4
(22) Date de dépôt: 06.11.2001
(51) Int. Cl.: G01D 5/165, G01D 3/08

(54) **Procédé et dispositif pour la sécurisation du traitement de signaux**
Verfahren und Vorrichtung zur Verifizierung von der Signalverarbeitung
Process and device for the verifying of the treatment of signals

(30) Priorité: 30.11.2000 FR 0015528
(43) Date de publication de la demande: 05.06.2002
(73) Titulaire: POTAIN, 69130 Ecully (FR)
(72) Inventeur: Vialette, M. Philippe, 71800 Baudemont (FR)
(74) Mandataire: Bratel, Gérard

(56) Documents cités:
- FR-A- 2 705 453
- GB-A- 2 300 484
- US-A- 6 133 743
- XIUJUN LI ET AL: "A NOVEL SMART RESISTIVE-CAPACITIVE POSITION SENSOR" IEEE TRANSACTIONS ON INSTRUMENTATION AND MEASUREMENT, IEEE INC. NEW YORK, US, vol. 44, no. 3, 1 juin 1995 (1995-06-01), pages 768-770, XP000527560 ISSN: 0018-9456

## Description

La présente invention concerne, de façon générale, les dispositifs de contrôle/commande pour appareils de levage, et plus particulièrement les dispositifs de sécurité tels que limiteurs de charge, de moment, de mouvement (levage, rotation, distribution, translation) ou de vitesse, prévus sur les appareils de levage tels que grues à tour.

Plus particulièrement, l'invention se rapporte à la sécurisation du traitement du signal des capteurs de ces dispositifs de sécurité, le plus souvent réalisés sous la forme de capteurs de type analogique résistif, alimentés électriquement en courant continu.

Parmi les systèmes de contrôle des dispositifs de sécurité des appareils de levage, on rencontre généralement des systèmes à capteurs analogiques dits "passifs", c'est-à-dire devant être alimentés électriquement pour fonctionner, par exemple des potentiomètres, des jauges ou des sondes, ces capteurs étant choisis en raison de leur faible coût, de leur technologie éprouvée et de leur maintenabilité.

L'utilisation de ce genre de systèmes de contrôle, sur des appareils de levage, nécessite une sécurisation de la chaîne d'acquisition, qui conditionne et transmet le signal analogique délivré par un tel capteur passif.

Pour sécuriser cette chaîne d'acquisition sur les appareils de levage, on utilise actuellement, comme seule solution connue, la redondance des circuits avec comparaison des valeurs acquises. Un tel système est notamment mis en application sur les grues à tour construites par la Société demanderesse POTAIN.

L'article « A Novel Smart Resistive-Capacitive Position SEnsor » de Xiujun Li and al. dans IEEE TRANSACTIONS ON INSTRUMENTATION AND MEASUREMENT, IEEE INC. NEW YORK USA, VOL. 44, n° 3, 1er juin 1995, pages 768-770, XP 000527560-ISSN :0018-9456, décrit un dispositif de mesure de position angulaire, utilisant un principe de mesure de courant électrique. Le dispositif comprend un oscillateur, une résistance et un condensateur. Ce dispositif n'est pas appliqué à un appareil de levage, et il ne sert pas à garantir le bon fonctionnement d'un capteur purement résistif et de sa chaîne de traitement.

Le document de brevet US-A-6133743 concerne un système d'asservissement de position d'une tête mobile, avec utilisation de capteurs de position de type capacitif et non résistif. Le traitement du signal reste purement analogique, et il ne comprend aucune opération de sommation ou de comparaison visant à garantir le bon fonctionnement d'un capteur.

Le document de brevet FR-A-2705453 a pour finalité de vérifier le bon fonctionnement d'un système de mesure, notamment de mesure d'un couple, par un principe de redondance de capteurs avec deux voies entièrement distinctes, comprenant deux sources d'information et deux chaînes de traitement indépendantes. Ce document n'indique donc pas une solution visant à fiabiliser une mesure de position faite par un capteur unique, sans recourir à la redondance.

Enfin, le document de brevet GB-A-2300484 vise la sécurisation d'un signal de position, sur un véhicule à moteur. Ce document prévoit un doublement du capteur de position, avec deux capteurs de type « potentiomètre », et un doublement de la numérisation du signal. Il s'agit donc, là aussi, d'un principe de redondance et non d'une solution utilisant un capteur unique et une chaîne d'acquisition unique.

Les inconvénients majeurs des solutions existantes en sont le coût, la complexité d'installation, et la disponibilité réduite du fait qu'elle conduit à doubler les risques de dysfonctionnement.

La présente invention vise à éviter ces inconvénients, en fournissant une solution qui, pour une sécurisation identique, est notablement plus simple et plus économique, et diminue les risques de dysfonctionnement du système.

A cet effet, l'invention a essentiellement pour objet un procédé pour la sécurisation du traitement de signaux de sécurité, plus particulièrement d'un signal délivré par un capteur de type analogique résistif, alimenté électriquement en courant continu, dans un dispositif de sécurité sur un appareil de levage, le signal analogique délivré par le capteur étant converti en un signal numérique dans un convertisseur analogique/numérique de résolution donnée, le procédé étant caractérisé en ce que :
- à un premier instant, un signal numérique correspondant au signal analogique délivré par le capteur est acquis et mémorisé,
- puis les tensions d'alimentation du capteur sont inversées,
- après cette inversion, à un instant ultérieur, un nouveau signal numérique correspondant au signal analogique délivré par le capteur est acquis,
- il est procédé à la sommation des deux signaux numériques acquis,
- la somme de ces deux signaux numériques est comparée à la résolution du convertisseur analogique/numérique, et
- si cette somme est égale ou approximativement égale à la résolution du convertisseur, un signal de commande d'un actionneur de l'appareil de levage, correspondant à une consigne de commande , est autorisé ou
- si ladite somme est significativement différente de la résolution du convertisseur, le signal de commande n'est pas autorisé.

Ainsi, le principe de l'invention repose sur la possibilité de vérifier le fonctionnement de la chaîne d'acquisition du signal d'un capteur analogique résistif, par simple inversion des tensions d'alimentation de ce capteur. En cas de fonctionnement correct, les deux signaux numériques, acquis respectivement avant et après cette inversion sont "complémentaires", c'est-à-dire que leur somme est constante, et égale à la résolution du convertisseur analogique/numérique. Au contraire, en cas de dysfonctionnement, la somme des deux valeurs numériques considérées n'est plus égale à cette résolution, ce qui permet de détecter aisément ce dysfonctionnement.

Selon un mode de mise en oeuvre préféré du procédé, objet de l'invention, le signal analogique, délivré par le capteur, est filtré et adapté, pour donner un signal analogique numérisable qui est le signal à convertir, avant et après inversion des tensions d'alimentation du capteur.

Avantageusement, dans le cas où la somme calculée des deux signaux numériques est significativement différente de la résolution du convertisseur analogique/numérique, une signalisation est émise pour indiquer l'état de dysfonctionnement.

L'invention a aussi pour objet un dispositif pour la mise en oeuvre du procédé défini ci-dessus.

Ce dispositif se définit, essentiellement, comme un dispositif pour la sécurisation du traitement de signaux de sécurité, plus particulièrement du signal délivré par un capteur de type analogique résistif, alimenté électriquement en courant continu, dans un dispositif de sécurité sur un appareil de levage, le capteur étant relié à un convertisseur analogique/numérique de résolution donnée, qui convertit le signal analogique délivré par le capteur en un signal numérique, transmis à une unité de traitement arithmétique et logique qui reçoit aussi une consigne de commande, et qui est apte à délivrer un signal d'autorisation de commande d'un actionneur de mouvement de l'appareil de levage, le dispositif étant caractérisé en ce qu'il comprend, en combinaison :
- des moyens de commande d'inversion des tensions d'alimentation du capteur,
- des moyens d'acquisition des signaux numériques correspondant à des signaux analogiques délivrés par le capteur, respectivement avant et après inversion de ses tensions d'alimentation,
- des moyens de sommation des deux signaux numériques acquis, et de comparaison de la somme de ces deux signaux à la résolution du convertisseur analogique/numérique, et
- des moyens d'autorisation/interdiction de la commande de l'actionneur, correspondant à la consigne de commande, selon le résultat de la comparaison de la somme précitée à la résolution du convertisseur.

Le capteur étant notamment un potentiomètre, les moyens de commande d'inversion assurent dans ce cas l'inversion des tensions d'alimentation présentes aux bornes du potentiomètre.

De préférence, un circuit de conditionnement analogique, destiné à filtrer et adapter le signal analogique délivré par le capteur, tel que potentiomètre, est intercalé entre ce capteur et le convertisseur analogique/numérique.

Dans une forme de réalisation avantageuse du dispositif de l'invention, les moyens d'acquisition des deux signaux numériques, de sommation de ces signaux, de comparaison de la somme de ces signaux à la résolution du convertisseur analogique/numérique, et d'autorisation/interdiction de la commande selon le résultat de la comparaison, sont incorporés à l'unité de traitement arithmétique et logique précitée, cette dernière possédant une sortie reliée aux moyens de commande d'inversion des tensions d'alimentation du capteur, réalisés sous la forme d'un circuit d'inversion.

Avantageusement, l'unité de traitement arithmétique et logique, incorporant (comme indiqué ci-dessus) les moyens d'acquisition des deux signaux numériques, de sommation de ces signaux et de comparaison de leur somme à la résolution du convertisseur, est réalisée sous la forme d'un microprocesseur.

Grâce au procédé et au dispositif, objets de l'invention, il devient possible de mettre en oeuvre un seul capteur, au lieu de deux capteurs (pour redondance des circuits, selon la technique antérieure), tout en obtenant une sécurisation identique, voire même améliorée. L'invention conduit aussi à une simplification du câblage de l'appareil de levage concerné, puisqu'elle nécessite de câbler un seul capteur, au lieu de deux, d'où une économie. De plus, l'invention diminue les causes et risques de dysfonctionnement, du fait qu'elle met en oeuvre un seul circuit de sécurisation, au lieu de deux circuits. Enfin, le système proposé par cette invention est fiable pratiquement à 100%, et auto-contrôlé : si le circuit de sécurisation est lui-même défaillant, il ne commande pas l'inversion de la tension d'alimentation du capteur, de sorte que la complémentarité des deux signaux numériques n'est plus assurée, si bien que le système se met en défaut.

L'invention sera mieux comprise à l'aide de la description qui suit, en référence au dessin schématique annexé représentant, à titre d'exemple, une forme d'exécution de ce dispositif pour la sécurisation du traitement de signaux de sécurité, sur des appareils de levage :
La figure 1 représente le dispositif objet de l'invention, sous la forme d'un schéma fonctionnel.
La figure 2 est un organigramme qui illustre le fonctionnement de ce dispositif.

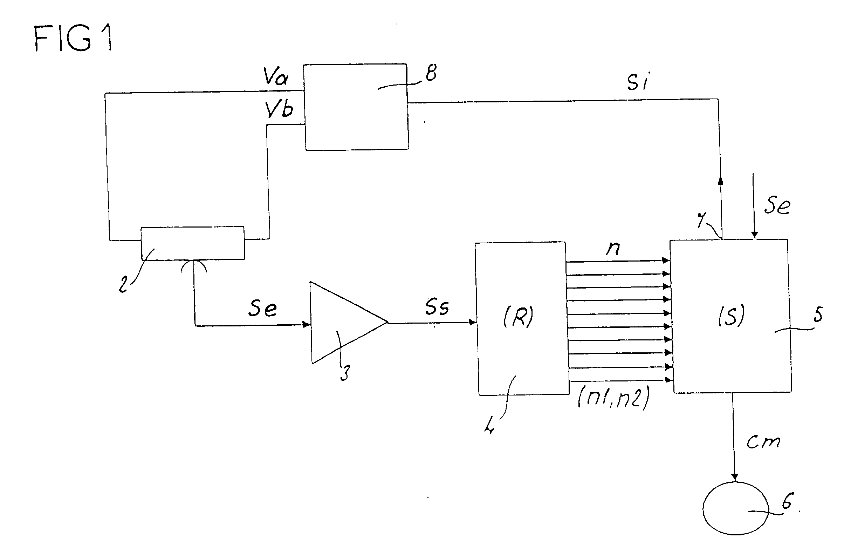

La figure 1 représente un certain nombre d'éléments d'un système de contrôle/commande, connu en soi, auquel s'applique l'invention.

Ainsi, le système comprend un capteur 2 de type analogique résistif, par exemple (comme illustré sur la figure) un potentiomètre, monté de façon convenable sur un appareil de levage. Le capteur 2 est alimenté électriquement par une tension continue (Vb - Va), Va et Vb désignant les tensions électriques respectivement présentes aux deux bornes extrêmes du potentiomètre. Le capteur 2 constitué par ce potentiomètre délivre un signal analogique Se, fonction de la position du curseur de ce potentiomètre.

Le système comprend aussi un circuit de conditionnement analogique 3, destiné à filtrer les parasites et à adapter le signal du capteur 2. Ce circuit 3 reçoit à son entrée le signal Se, et il délivre à sa sortie un signal analogique Ss.

Le système comprend encore un convertisseur analogique/numérique 4, de résolution R, cette résolution étant par exemple de 12 bits de sorte que ledit convertisseur peut délivrer des valeurs numériques de 0 à 4095. Ce convertisseur analogique/numérique 4 reçoit à son entrée le signal analogique adapté Ss, et il délivre à sa sortie un signal numérique, autrement dit un nombre entier n, correspondant au signal d'entrée Ss, donc au signal Se du capteur 2.

Enfin, le système comprend de façon connue une unité de traitement arithmétique et logique 5, réalisable sous la forme d'un microprocesseur. L'unité 5 reçoit le signal numérique n délivré par le convertisseur 4. Elle reçoit aussi une consigne de commande Sc délivrée par l'opérateur de l'appareil de levage. Cette unité 5 délivre ou non un signal de commande Cm, afin d'autoriser ou non la commande d'un actionneur 6 du mouvement concerné de l'appareil de levage, l'actionneur 6 étant généralement un moteur électrique ou hydraulique.

Le dispositif de sécurisation, objet de l'invention, comprend l'unité de traitement arithmétique et logique 5, en particulier sous la forme d'un microprocesseur, et une sortie spécifique 7 de cette unité 5. Ce dispositif comprend encore un circuit 8 d'inversion des tensions d'alimentation Va et Vb du capteur 2, la sortie 7 de l'unité 5 étant reliée à l'entrée du circuit 8.

Le circuit d'inversion 8 possède deux sorties, sur lesquelles sont respectivement présentes les deux tensions Va et Vb, ces deux sorties étant respectivement raccordées aux deux bornes du potentiomètre constituant le capteur 2.

L'unité de traitement arithmétique et logique 5 est prévue pour délivrer, sur sa sortie 7, un ordre Si d'inversion des tensions d'alimentation du capteur 2, selon un algorithme. Cet ordre Si est transmis au circuit d'inversion 8, qui commande alors l'inversion des tensions d'alimentation du capteur 2. Par exemple, avant l'inversion, les tensions aux sorties du circuit 8 sont : Va = - 5 volts et Vb = + 5 volts, tandis qu'après l'inversion, ces deux tensions deviennent, respectivement : Va = + 5 volts et Vb = - 5 volts.

Le fonctionnement du dispositif, précédemment décrit, s'établit ainsi, dans le détail, de la manière suivante :

A un certain instant t1, le capteur 2 délivre un signal de mesure analogique Se, transformé d'abord par le circuit 3 en un signal analogique numérisable Ss, puis converti, dans le convertisseur 4, en une valeur numérique correspondante n1. L'unité 5 (microprocesseur) mémorise la valeur n1 correspondant à l'instant t1, et elle délivre, sur sa sortie 7, le signal d'inversion Si. Recevant ce signal Si, le circuit d'inversion 8 commande l'inversion de l'alimentation du capteur 2.

Ainsi, à un instant ultérieur t2, le capteur 2 délivre un signal analogique Se inversé, qui est lui aussi adapté par le circuit 3, puis converti en une valeur numérique correspondante n2. L'unité 5 (microprocesseur) acquiert cette nouvelle valeur n2.

L'unité 5 (microprocesseur) somme les deux nombres n1 et n2, et elle compare le résultat de la sommation, soit un nombre S = n1 + n2, à la résolution R du convertisseur analogique/numérique 4.

Si le fonctionnement du système est correct, les deux valeurs n1 et n2, qui correspondent respectivement aux signaux Se du capteur 2 avant et après inversion de son alimentation, doivent être complémentaires, autrement dit leur somme S est égale ou approximativement égale à la résolution R du convertisseur 4. Dans ce cas, l'unité 5 (microprocesseur) autorise le signal Cm de commande de l'actionneur 6, correspondant à la consigne de commande Sc.

Par contre, si le fonctionnement du système est incorrect, les deux valeurs n1 et n2, correspondant respectivement aux signaux Se du capteur 2 avant et après inversion de son alimentation, ne sont plus complémentaires, autrement dit leur somme S devient significativement différente de la résolution R du convertisseur 4. Dans ce cas, l'unité 5 (microprocesseur) n'autorise plus le signal Cm, de sorte que la commande de l'actionneur 6 se trouve interdite. Simultanément, le dysfonctionnement ainsi détecté est pris en compte, et signalé à l'opérateur, par exemple par affichage sur un écran de contrôle. L'opérateur a alors la possibilité de constater le dysfonctionnement, et de valider éventuellement un mode de travail "dégradé".

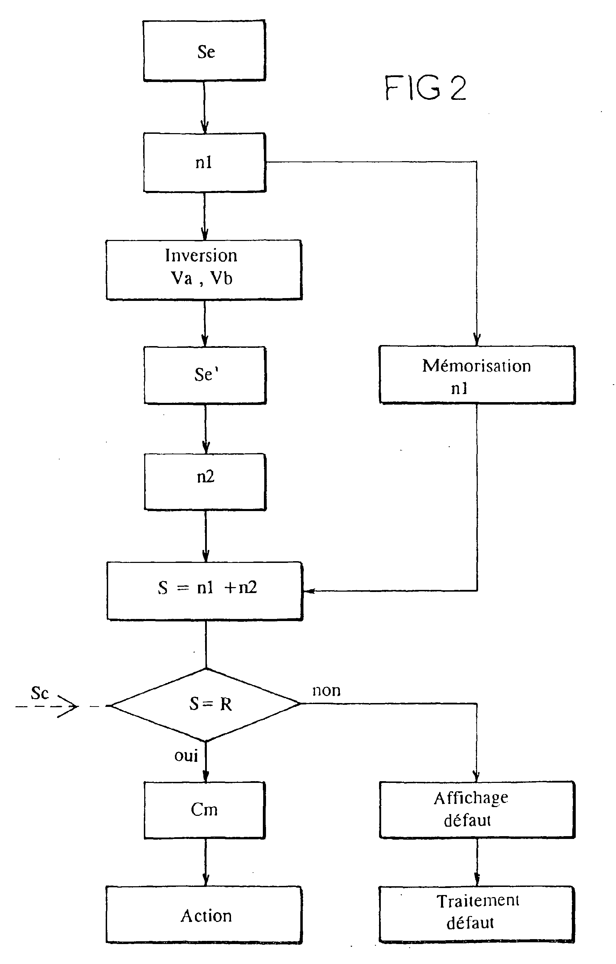

Le fonctionnement du dispositif est encore illustré par l'organigramme de la figure 2, ainsi que par le tableau ci-après, dans lequel sont indiquées les valeurs n1 et n2, respectivement avant et après inversion de l'alimentation du capteur, et leur somme S, pour les valeurs extrêmes, pour la valeur médiane et pour une valeur quelconque de la position de commande ; ce tableau se réfère à l'état normal du système, dans lequel la somme S = n1 + n2 est égale à la résolution R.

| Position commande | Signal capteur (Se) | Nombre (n1) | Inversion des alimentations (Se' =-Se) | Nombre (n2) | Somme (S) = n1 + n2 |
|---|---|---|---|---|---|
| Valeur extrême | Se = Va | n1 = 0 | Se = -Va = Vb | n2 = R | n1 + n2 = R |
| Valeur médiane | Se = 0 | n1 = R/2 | Se = 0 | n2 = R/2 | n1 + n2 = R |
| Valeur extrême | Se = Vb | n1 = R | Se = -Vb = Va | n2 = 0 | n1 + n2 = R |
| Valeur quelconque | Va < Se < Vb | n1 = ((Vb + Se)/(Vb-Va)).R | Vb < -Se < Va | n2 = ((Vb-Se)/(Vb-Va)).R | n1 + n2 = R |

L'observation de ce tableau montre que le dispositif est fiable pratiquement à 100%, car les seules valeurs qui ne permettent pas la détection d'un dysfonctionnement par le procédé de l'invention sont situées au milieu de la plage du capteur, là où la valeur du signal Se de ce capteur (avant ou après inversion) est égale à zéro. Toutefois, cette position particulière correspond à une zone non préférentielle d'utilisation, qui est aussi une zone de non-risque en utilisation.

De plus, le système est auto-contrôlé car, si le dispositif de sécurisation est lui-même défaillant, il ne commande pas l'inversion de l'alimentation du capteur 2, de sorte que la complémentarité des signaux Se de ce capteur, donc des valeurs n1 et n2, n'est plus assurée. Le système se met alors aussi, automatiquement, en défaut.

Le procédé et le dispositif, objets de l'invention, sont applicables à tous types de sécurité utilisant des capteurs analogiques passifs, équipant des appareils de levage et notamment des grues à tour. Il peut s'agir de dispositifs de sécurité liés à l'utilisation de la grue, en travail : limiteurs de charge, de moment, de mouvement (levage, rotation, distribution translation). Il peut aussi s'agir de fonctions plus particulières telles que : contrôle de la cinématique de montage de la grue (par exemple : dépliage simultané de la flèche et du mât), contrôle de stabilité (par exemple : inclinomètre avec vérins), contrôle d'organes métalliques (par exemple : contrôle de la tension du câble de distribution), ou autres fonctions de contrôle.

L'on ne s'éloignerait pas du cadre de l'invention, telle que définie dans les revendications, en utilisant tous moyens réalisant les opérations de calcul et les opérations logiques, que sont l'addition des valeurs n1 et n2 et la comparaison de leur somme. Dans le même ordre d'idées, l'invention reste applicable à des appareils de levage de toutes sortes, son domaine d'application n'étant pas limité aux grues à tour. Enfin, bien que l'invention ait été décrite en considérant le traitement du signal issu d'un unique capteur, il apparaîtra clairement à l'homme du métier que les mêmes composants, tels que le convertisseur 4, l'unité de traitement arithmétique et logique 5 et le circuit d'inversion 8, peuvent aussi être communs à plusieurs capteurs (équipant le même appareil de levage), et traiter dans ce cas les signaux délivrés par tous ces capteurs.

## Revendications

1. Procédé pour la sécurisation du traitement de signaux de sécurité, plus particulièrement d'un signal (Se) délivré par un capteur (2) de type analogique résistif, alimenté électriquement en courant continu, dans un dispositif de sécurité sur un appareil de levage, le signal analogique (Se) délivré par le capteur (2) étant converti en un signal numérique (n) dans un convertisseur analogique/numérique (4) de résolution donnée (R), le procédé étant **caractérisé en ce que** :
- à un premier instant (t1), un signal numérique (n1) correspondant au signal analogique (Se) délivré par le capteur (2) est acquis et mémorisé,
- puis les tensions d'alimentation (Va, Vb) du capteur (2) sont inversées,
- après cette inversion, à un instant ultérieur (t2), un nouveau signal numérique (n2) correspondant au signal analogique (Se') délivré par le capteur (2) est acquis,
- il est procédé à la sommation des deux signaux numériques (n1, n2) acquis,
- la somme (S) de ces deux signaux numériques est comparée à la résolution (R) du convertisseur analogique/numérique (4), et
- si cette somme (S) est égale ou approximativement égale à la résolution (R) du convertisseur (4), un signal de commande (Cm) d'un actionneur (6) de l'appareil de levage, correspondant à une consigne de commande (Sc), est autorisé, ou
- si ladite somme (S) est significativement différente de la résolution (R) du convertisseur (4), le signal de commande (Cm) n'est pas autorisé.

2. Procédé selon la revendication 1, **caractérisé en ce que** le signal analogique (Se), délivré par le capteur (2), est filtré et adapté, pour donner un signal analogique numérisable (Ss) qui est le signal à convertir, avant et après inversion des tensions d'alimentation du capteur (2).

3. Procédé selon la revendication 1 ou 2, **caractérisé en ce que**, dans le cas où la somme (S) des deux signaux numériques (n1, n2) est significativement différente de la résolution (R) du convertisseur analogique/numérique (4), une signalisation est émise pour indiquer l'état de dysfonctionnement.

4. Dispositif pour la sécurisation du traitement de signaux de sécurité, plus particulièrement du signal (Se) délivré par un capteur (2) de type analogique résistif, alimenté électriquement en courant continu, dans un dispositif de sécurité sur un appareil de levage, le capteur (2) étant relié à un convertisseur analogique/numérique (4) de résolution donnée (R), qui convertit le signal analogique (Se) délivré par le capteur (2) en un signal numérique (n), transmis à une unité de traitement arithmétique et logique (5) qui reçoit aussi une consigne de commande (Sc), et qui est apte à délivrer un signal d'autorisation de commande (Cm) d'un actionneur de mouvement (6) de l'appareil de levage, le dispositif étant **caractérisé en ce qu'**il comprend, en combinaison :
- des moyens (7, 8) de commande d'inversion des tensions d'alimentation (Va, Vb) du capteur (2),
- des moyens (5) d'acquisition des signaux numériques (n1, n2) correspondant à des signaux analogiques (Se, Se') délivrés par le capteur (2), respectivement avant et après inversion de ses tensions d'alimentation,
- des moyens (5) de sommation des deux signaux numériques (n1, n2) acquis, et de comparaison de la somme (S) de ces deux signaux à la résolution (R) du convertisseur analogique/numérique (4), et
- des moyens d'autorisation/interdiction de la commande (Cm) de l'actionneur (6), correspondant à la consigne de commande (Sc), selon le résultat de la comparaison de la somme (S) précitée à la résolution (R) du convertisseur (4).

5. Dispositif selon la revendication 4, **caractérisé en ce que** le capteur (2) est un potentiomètre, les moyens de commande d'inversion (7, 8) assurant l'inversion des tensions d'alimentation (Va, Vb) présentes aux bornes du potentiomètre.

6. Dispositif selon la revendication 4 ou 5, **caractérisé en ce qu'**un circuit de conditionnement analogique (3), destiné à filtrer et adapter le signal analogique (Se) délivré par le capteur (2), est intercalé entre ce capteur (2) et le convertisseur analogique/numérique (4).

7. Dispositif selon l'une quelconque des revendications 4 à 6, **caractérisé en ce que** les moyens d'acquisition des deux signaux numériques (n1, n2), de sommation de ces signaux (n1, n2), de comparaison de la somme (S) de ces signaux à la résolution (R) du convertisseur analogique/numérique (4), et d'autorisation/interdiction de la commande (Cm) selon le résultat de la comparaison, sont incorporés à l'unité de traitement arithmétique et logique (5), cette dernière possédant une sortie (7) reliée aux moyens (8) de commande d'inversion des tensions d'alimentation (Va, Vb) du capteur (2), réalisés sous la forme d'un circuit d'inversion (8).

8. Dispositif selon la revendication 7, **caractérisé en ce que** l'unité de traitement arithmétique et logique (5), incorporant les moyens d'acquisition des deux signaux numériques (n1, n2), de sommation de ces signaux (n1, n2) et de comparaison de leur somme (S) à la résolution (R) du convertisseur (4), est réalisée sous la forme d'un microprocesseur.

9. Dispositif selon l'une quelconque des revendications 4 à 8, **caractérisé en ce qu'**il est appliqué à des dispositifs de sécurité tels que limiteurs de charge, de moment, de mouvement ou de vitesse, ou à des fonctions de contrôle, prévus sur des grues à tour, et utilisant des capteurs analogiques passifs (2).

## Claims

1. Process for making secure the processing of safety signals, more particularly of a signal (Se) delivered by a sensor (2) of resistive analog type, supplied electrically with DC current, in a safety device on a lifting apparatus, the analog signal (Se) delivered by the sensor (2) being converted into a digital signal (n) in an analog/digital converter (4) of given resolution (R), the process being **characterized in that**:
- at a first instant (t1), a digital signal (n1) corresponding to the analog signal (Se) delivered by the sensor (2) is acquired and stored,
- then the supply voltages (Va, Vb) of the sensor (2) are inverted,
after this inversion, at a later instant (t2), a new digital signal (n2) corresponding to the analog signal (Se') delivered by the sensor (2) is acquired,
- the two digital signals (n1, n2) acquired are summed,
the sum (S) of these two digital signals is compared with the resolution (R) of the analog/digital converter (4), and
- if this sum (S) is equal or approximately equal to the resolution (R) of the converter (4), a control signal (Cm) for operating an actuator (6) of the lifting apparatus, corresponding to a control pre-set (Sc), is enabled, or
- if said sum (S) is significantly different from the resolution (R) of the converter (4), the control signal (Cm) is not enabled.

2. Process according to claim 1, **characterized in that** the analog signal (Se), delivered by the sensor (2), is filtered and matched, so as to yield a digitizable analog signal (Ss) which is the signal to be converted, before and after inversion of the supply voltages of the sensor (2).

3. Process according to claim 1 or 2, **characterized in that**, in the case where the sum (S) of the two digital signals (n1, n2) is significantly different from the resolution (R) of the analog/digital converter (4), a signaling is emitted to indicate the state of malfunctioning.

4. Device for making secure the processing of safety signals, more particularly of the signal (Se) delivered by a sensor (2) of resistive analog type, supplied electrically with DC current, in a safety device on a lifting apparatus, the sensor (2) being linked to an analog/digital converter (4) of given resolution (R), which converts the analog signal (Se) delivered by the sensor (2) into a digital signal (n) transmitted to an arithmetic and logic processing unit (5) which also receives a control pre-set (Sc), and which is able to deliver a control enable signal (Cm) for operating a motion actuator (6) for moving the lifting apparatus, the device being **characterized in that** it comprises, in combination:
- control means (7, 8) for inverting the supply voltages (Va, Vb) of the sensor (2),
- means (5) for acquiring the digital signals (n1, n2) corresponding to analog signals (Se, Se') delivered by the sensor (2), respectively before and after inversion of its supply voltages,
- means (5) of summing the two digital signals (n1, n2) acquired, and of comparing the sum (S) of these two signals with the resolution (R) of the analog/digital converter (4), and
- means of enabling/disabling the control (Cm) of the actuator (6), corresponding to the pre-set (Sc), according to the result of the comparison of the aforesaid sum (S) with the resolution (R) of the converter (4).

5. Device according to claim 4, **characterized in that** the sensor (2) is a potentiometer, the means of control of inversion (7, 8) carrying out the inversion of the supply voltages (Va, Vb) present at the terminals of the potentiometer.

6. Device according to claim 4 or 5, **characterized in that** an analog conditioning circuit (3), intended for filtering and matching the analog signal (Se) delivered by the sensor (2), is interposed between this sensor (2) and the analog/digital converter (4).

7. Device according to any one of claims 4 to 6, **characterized in that** the means of acquiring the two digital signals (n1, n2), of summing these signals (n1, n2), of comparing the sum (S) of these signals with the resolution (R) of the analog/digital converter (4), and of enabling/disabling the control (Cm) according to the result of the comparison, are incorporated into the arithmetic and logic processing unit (5), the latter possessing an output (7) linked to the means (8) of control of inversion of the supply voltages (Va, Vb) of the sensor (2), which means are embodied in the form of an inversion circuit (8).

8. Device according to claim 7, **characterized in that** the arithmetic and logic processing unit (5), incorporating the means of acquiring the two digital signals (n1, n2), of summing these signals (n1, n2) and of comparing their sum (S) with the resolution (R) of the converter (4), is embodied in the form of a microprocessor.

9. Device according to any one of claims 4 to 8, **characterized in that** it is applied to safety devices such as load limiters, torque limiters, motion limiters or speed limiters, or to monitoring functions, provided on tower cranes, and using passive analog sensors (2).

## Patentansprüche

1. Verfahren zur Sicherung der Verarbeitung von Sicherheitssignalen, insbesondere eines von einem elektrisch mit Gleichstrom gespeisten Sensor (2) vom analog-resistiven Typ gelieferten Signals (Se), in einer Sicherheitsvorrichtung in einem Hebegerät, wobei das vom Sensor (2) gelieferte analoge Signal (Se) in einem Analog/Digital-Wandler (4) mit gegebener Auflösung (R) in ein digitales Signal (n) umgewandelt wird, wobei das Verfahren **dadurch gekennzeichnet ist, dass**:
- in einem ersten Zeitpunkt (t1) ein digitales Signal (n1) entsprechend dem vom Sensor (2) gelieferten analogen Signal (Se) erfasst und gespeichert wird,
- dann die Speisespannungen (Va, Vb) des Sensors (2) invertiert werden,
- nach dieser Inversion, in einem späteren Zeitpunkt (t2), ein neues digitales Signal (n2) entsprechend dem vom Sensor (2) gelieferten analogen Signal (Se') erfasst wird,
- die Summierung der zwei erfassten digitalen Signale (n1, n2) durchgeführt wird,
- die Summe (S) dieser zwei digitalen Signale mit der Auflösung (R) des Analog/Digital-Wandlers (4) verglichen wird, und
- wenn diese Summe (S) gleich oder in etwa gleich der Auflösung (R) des Wandlers (4) ist, ein Steuersignal (Cm) eines Stellglieds (6) des Hebegeräts entsprechend einer Steuerungsanweisung (Sc) genehmigt wird, oder
- wenn die Summe (S) deutlich anders als die Auflösung (R) des Wandlers (4) ist, das Steuersignal (Cm) nicht genehmigt wird.

2. Verfahren nach Anspruch 1, **dadurch gekennzeichnet, dass** vor und nach Inversion der Speisespannungen des Sensors (2) das vom Sensor (2) gelieferte analoge Signal (Se) gefiltert und angepasst wird, um ein digitalisierbares analoges Signal (Ss) zu ergeben, das das umzuwandelnde Signal ist.

3. Verfahren nach Anspruch 1 oder 2, **dadurch gekennzeichnet, dass** in dem Fall, in dem die Summe (S) der zwei digitalen Signale (n1, n2) deutlich anders ist als die Auflösung (R) des Analog/Digital-Wandlers (4), eine Signalisierung gesendet wird, um den Zustand der Funktionsstörung anzuzeigen.

4. Vorrichtung zur Sicherung der Verarbeitung von Sicherheitssignalen, insbesondere des von einem elektrisch mit Gleichstrom gespeisten Sensor (2) vom analog-resistiven Typ gelieferten Signals (Se), in einer Sicherheitsvorrichtung in einem Hebegerät, wobei der Sensor (2) mit einem Analog/Digital-Wandler (4) mit gegebener Auflösung (R) verbunden ist, der das vom Sensor (2) gelieferte analoge Signal (Se) in ein digitales Signal (n) umwandelt, das an eine arithmetische und logische Verarbeitungseinheit (5) übertragen wird, die auch eine Steuerungsanweisung (Sc) empfängt, und die ein Genehmigungssignal (Cm) der Steuerung eines Bewegungs-Stellglieds (6) des Hebegeräts liefern kann, wobei die Vorrichtung **dadurch gekennzeichnet ist, dass** sie in Kombination enthält:
- Einrichtungen (7, 8) zur Inversionssteuerung der Speisespannungen (Va, Vb) des Sensors (2),
- Einrichtungen (5) zur Erfassung der digitalen Signale (n1, n2) entsprechend vom Sensor (2) vor bzw. nach der Inversion seiner Speisespannungen gelieferten analogen Signalen (Se, Se'),
- Einrichtungen (5) zur Summierung der zwei erfassten digitalen Signale (n1, n2) und zum Vergleich der Summe (S) dieser zwei Signale mit der Auflösung (R) des Analog/Digital-Wandlers (4), und
- Einrichtungen zur Genehmigung/zum Verbot der Steuerung (Cm) des Stellglieds (6) entsprechend der Steuerungsanweisung (Sc) je nach dem Ergebnis des Vergleichs der erwähnten Summe (S) mit der Auflösung (R) des Wandlers (4).

5. Vorrichtung nach Anspruch 4, **dadurch gekennzeichnet, dass** der Sensor (2) ein Potentiometer ist, wobei die Einrichtungen zur Inversionssteuerung (7, 8) die Inversion der Speisespannungen (Va, Vb) gewährleisten, die an den Klemmen des Potentiometers vorhanden sind.

6. Vorrichtung nach Anspruch 4 oder 5, **dadurch gekennzeichnet, dass** eine analoge Konditionierungsschaltung (3), die dazu bestimmt ist, das vom Sensor (2) gelieferte analoge Signal (Se) zu filtern und anzupassen, zwischen diesen Sensor (2) und den Analog/Digital-Wandler (4) eingefügt ist.

7. Vorrichtung nach einem der Ansprüche 4 bis 6, **dadurch gekennzeichnet, dass** die Einrichtungen zur Erfassung der zwei digitalen Signale (n1, n2), zur Summierung dieser Signale (n1, n2), zum Vergleich der Summe (S) dieser Signale mit der Auflösung (R) des Analog/Digital-Wandlers (4), und zur Genehmigung/zum Verbot der Steuerung (Cm) je nach dem Ergebnis des Vergleichs in die arithmetische und logische Verarbeitungseinheit (5) eingebaut sind, wobei letztere einen Ausgang (7) aufweist, der mit den Einrichtungen (8) zur Inversionssteuerung der Speisespannungen (Va, Vb) des Sensors (2) verbunden ist, die in Form einer Inversionsschaltung (8) hergestellt sind.

8. Vorrichtung nach Anspruch 7, **dadurch gekennzeichnet, dass** die arithmetische und logische Verarbeitungseinheit (5), die die Einrichtungen zur Erfassung der zwei digitalen Signale (n1, n2), zur Summierung dieser Signale (n1, n2) und zum Vergleich ihrer Summe (S) mit der Auflösung (R) des Wandlers (4) enthält, in Form eines Mikroprozessors hergestellt wird.

9. Vorrichtung nach einem der Ansprüche 4 bis 8, **dadurch gekennzeichnet, dass** sie bei Sicherheitsvorrichtungen wie Lastbegrenzern, Momentbegrenzern, Bewegungs- oder Geschwindigkeitsbegrenzern, oder bei Kontrollfunktionen angewendet wird, die auf Turmkränen vorgesehen sind, und die passive analoge Sensoren (2) verwenden.
